# EUROPÄISCHE PATENTSCHRIFT

(11) **EP 2 550 463 B1**
(45) Veröffentlichungstag und Bekanntmachung des Hinweises auf die Patenterteilung: **03.02.2016**
(21) Anmeldenummer: 11703188.0
(22) Anmeldetag: 03.02.2011
(51) Int. Cl.: F16C 33/64

(54) **LAGERRING**
BEARING RING
BAGUE DE ROULEMENT

(30) Priorität: 24.03.2010 DE 102010012476
(43) Veröffentlichungstag der Anmeldung: 30.01.2013
(73) Patentinhaber: Schaeffler Technologies AG & Co. KG, 91074 Herzogenaurach (DE)
(72) Erfinder: KRUHÖFFER, Wolfram, 91086 Aurachtal (DE); MEDERER, Tobias, 90596 Schwanstetten (DE); GRAF-GOLLER, Oliver, 90562 Heroldsberg (DE)
(86) Internationale Anmeldenummer: PCT/EP2011/051514
(87) Internationale Veröffentlichungsnummer: WO 2011/117008

(56) Entgegenhaltungen:
- DE-A1- 2 319 484
- DE-A1- 2 723 928
- US-A- 1 675 728
- US-A- 6 065 322

## Beschreibung

### Gebiet der Erfindung

Die Erfindung betrifft einen Lagerring, bestehend aus einem Ringelement, das zumindest zwei Nuten aufweist, die sich von einer Axialseite bis zur anderen Axialseite des Ringelements erstrecken, wobei das Ringelement als durch Tiefziehen hergestellte Hülse ausgebildet ist und die Nuten beim Tiefziehen der Hülse mit eingearbeitet sind.

### Hintergrund der Erfindung

Aus der EP 0 016 529 B1 ist ein Lagerring bekannt, der aus einem Ringelement besteht, das zumindest zwei Nuten aufweist, die sich von einer Axialseite bis zur anderen Axialseite des Ringselements erstrecken und Sollbruchlinien beim Aufbrechen (Cracken) des Ringelements bilden.

Die dort dargestellten und beschriebenen Nuten haben eine eckige oder Zickzack-Form, damit die nach dem Cracken vorliegenden Lagerhälften beim Zusammenbau und Verspannen gegeneinander justiert werden. Weiterhin besteht das Grundmaterial aus einem weichen Werkstoff, der auf der Innen- und Außenfläche aufgekohlt wird und auch im Bereich des Nutgrunds durchgehend aufgekohlt wird, um einen harten Werkstoff im Bereich der Crackzone zu erzeugen.

Die Herstellung eines derartigen Lagerringes ist jedoch sehr aufwendig und kostenintensiv, zumal auch der besondere Nutenverlauf schwer herzustellen ist. Weiterhin bedarf es einer aufwendigen Nachbearbeitung der Innenflächen nach Teilung des Ringes, da an der Bruchzone an der Innenfläche des Ringelements Erhebungen und Verformungen durch das Cracken entstehen. Auch das Fertigbearbeiten, beispielsweise Fertigschleifen der Laufbahn und/oder Honen derselben, ist nicht ausreichend, da beim Zusammensetzen der Lagerhälften, die durch das Cracken entstehende raue Oberfläche an der Bruchstelle nicht immer zueinander passt und daher nachträglich noch ungewollte Verformungen in den Innenbereich des Lagerringes entstehen.

Aus der US 1 675 728 A ist ein Lagerring bekannt, in den Nuten in Form von Kerben eingearbeitet werden, um den Lagerring anschließend entlang dieser Nuten aufzubrechen und so zwei Lagerringhälften zu erhalten.

Ein gattungsgemäßer Lagerring geht aus der DE 23 19 484 A1 hervor.

### Aufgabe der Erfindung

Aufgabe der Erfindung ist es daher, die Nachteile des Lagerringes gemäß dem Stande der Technik zu verbessern, diesen zu vereinfachen und kostengünstiger auszugestalten. Darüber hinaus soll sichergestellt sein, dass an dem Übergangsbereich der nach dem Teilen zusammengesetzten Lagerschalen keine in die Lagerinnenfläche eintretenden schädlichen Verformungen entstehen.

### Beschreibung der Erfindung

Erfindungsgemäß wird diese Aufgabe bei einem Lagerring nach dem Oberbegriff des Anspruchs 1 derart gelöst, dass die Nuten Sollbruchlinien beim Aufbrechen (Cracken) des Ringelements bilden und als Laufbahnrücknahmen auf der Innenfläche der Hülse ausgebildet sind, wobei in den Laufbahnrücknahmen Zusatzkerben eingearbeitet sind.

Dadurch wird sichergestellt, dass auch nach dem Trennen und nachträglichen Zusammenfügen kein Material in die Laufbahn des Lagerrings gelangt. In die Laufbahnrücknahmen, deren Querschnittsverlauf bogenförmig ausgeführt ist, wird dann noch zusätzlich, vorzugsweise am Grund der Laufbahnrücknahmen, eine Kerbe eingebracht, wodurch die Bruchlinien eindeutig definiert sind.

Um einen besonders günstigen Übergang zwischen den Laufbahnrücknahmen auf der Innenfläche des Lagerringes zu erreichen, wird es darüber hinaus vorgeschlagen, dass der Übergangsbereich zwischen den Laufbahnrücknahmen und der Lagerfläche durch einen logarithmischen Verlauf definiert ist, so dass auch ein günstiger Abrollbereich bei Verwendung von Wälzkörpern innerhalb des Lagerringes sichergestellt ist.

Vorteilhaft ist es zudem, wenn zusätzlich auf der Außenfläche des Ringelements den Laufbahnrücknahmen der Innenseite gegenüberliegend Kerben vorgesehen sind, die in Richtung zum Hülsenkern spitz ausgeführt sind. Dadurch ergibt sich eine günstige Trennlinie nach dem Cracken ohne die besondere Ausgestaltung des Innenübergangs zu beeinflussen.

### Kurze Beschreibung der Zeichnungen

Zur weiteren Erläuterung der Erfindung wird auf die Zeichnungen verwiesen, in denen ein Ausführungsbeispiel der Erfindung vereinfacht dargestellt ist. Dabei zeigen:
- Figur 1: eine perspektivische Darstellung einer nicht erfindungsgemäßen, ungeteilten Hülse nach dem Tiefziehen;
- Figur 2: einen Ausschnitt der nicht erfindungsgemäßen Hülse im vergrößerten Maßstab mit einer Kerbe auf der Innenfläche;
- Figur 3: einen Ausschnitt der nicht erfindungsgemäßen Hülse im vergrößerten Maßstab mit einer Kerbe auf der Innenfläche und einer zusätzlichen Kerbe auf der Außenfläche"
- Figur 4: eine Ausgestaltung der nicht erfindungsgemäßen Hülse gemäß Figur 3 mit einer Außenkerbe, die einen runden Übergang zur Außenfläche der Hülse aufweist;
- Figur 5: eine Ansicht der nicht erfindungsgemäßen Hülse entsprechend Figur 3, bei der jedoch auf der Innenseite statt einer Kerbe eine Laufbahnrücknahme in Form einer Nut mit rundem Nutengrund vorgesehen ist;
- Figur 6: eine Ansicht einer erfindungsgemäßen Hülse ähnlich Figur 5 mit Zusatzkerbe in der Laufbahnrücknahme.

### Ausführliche Beschreibung der Zeichnungen

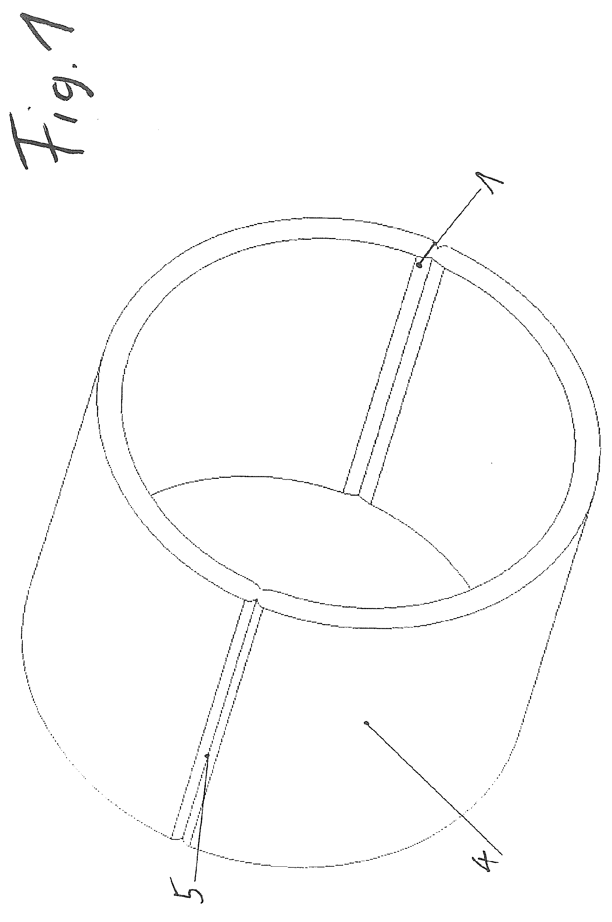

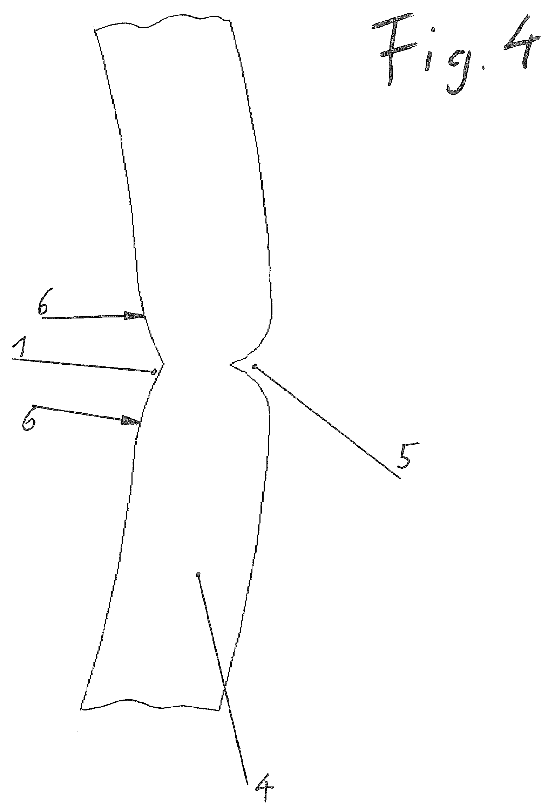

In den Figuren 1 und 4 ist, soweit im Einzelnen dargestellt, mit 4 eine Hülse bezeichnet, die auf gegenüberliegenden Seiten eine Innenkerbe 1 und eine Außenkerbe 5 aufweist, wobei sich die Kerben jeweils gegenüberstehen. Sie sind entsprechend Figur 4 ausgebildet, die einen Ausschnitt der Hülse 4 im vergrößerten Maßstab zeigt. Die Außenkerbe 5 läuft in der Mitte in Richtung Hülsenkern spitz zu und hat abgerundete Übergänge zur Außenfläche der Hülse 4.

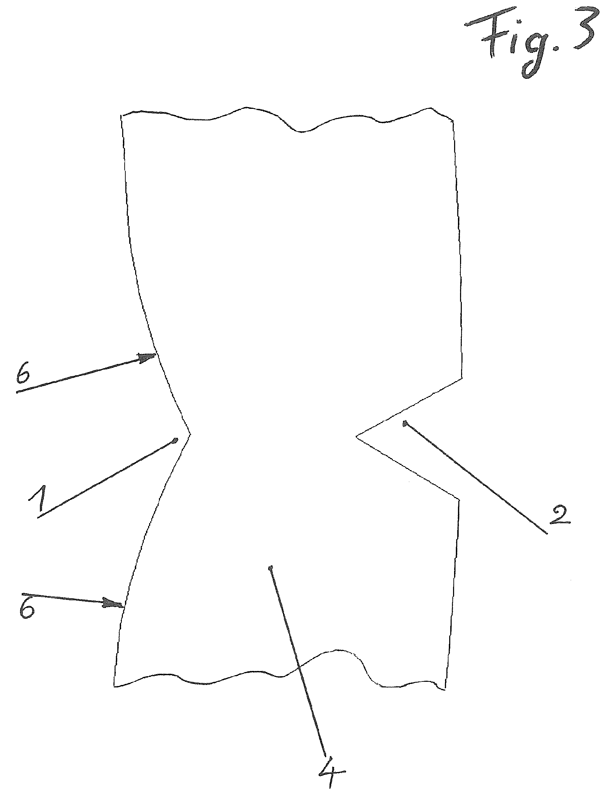

Die Hülse 4 in Figur 3 unterscheidet sich von den Figuren 1 und 4 dadurch, dass die modifizierte Außenkerbe, die mit 2 bezeichnet ist, kantige Übergänge zu der Außenfläche der Hülse 4 aufweist.

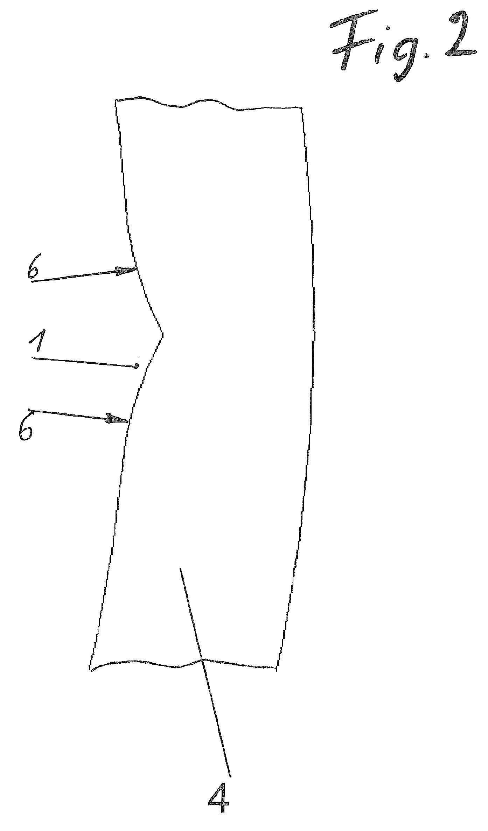

Wie in Figur 2 dargestellt, ist es nicht unbedingt erforderlich, dass auf der Außenfläche Kerben 2 oder 5 vorgesehen sind. Es reicht aus, wenn auf der Innenfläche Innenkerben 1 angebracht sind und die Hülsendicke so gewählt ist, dass ein Cracken möglich ist.

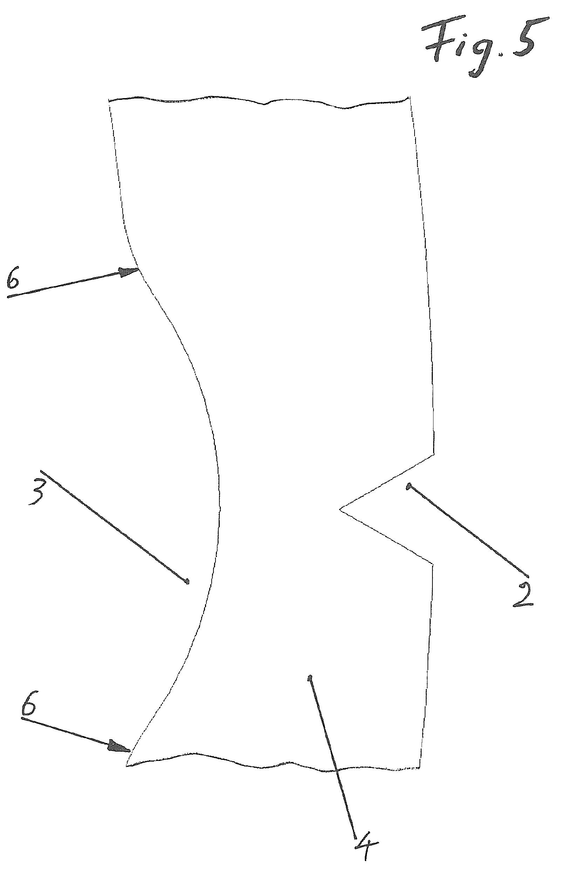

Die modifizierte Außenkerbe 2 gemäß Figur 5 entspricht der Ausgestaltung gemäß Figur 3. In Abänderung ist aber auf der gegenüberliegenden Innenseite eine Laufbahnrücknahme 3 vorgesehen, die sicherstellt, dass auch nach dem Cracken keine Beeinflussung der Innenfläche des Lagerringes vorliegt. Die Übergänge 6 von den Laufbahnrücknahmen 3 zur Innenfläche der Hülse 4 sind in vorteilhafter Weise als Übergangsbereiche 6 gestaltet, die einen logarithmischen Verlauf aufweisen, um einen optimalen Übergang sicherzustellen.

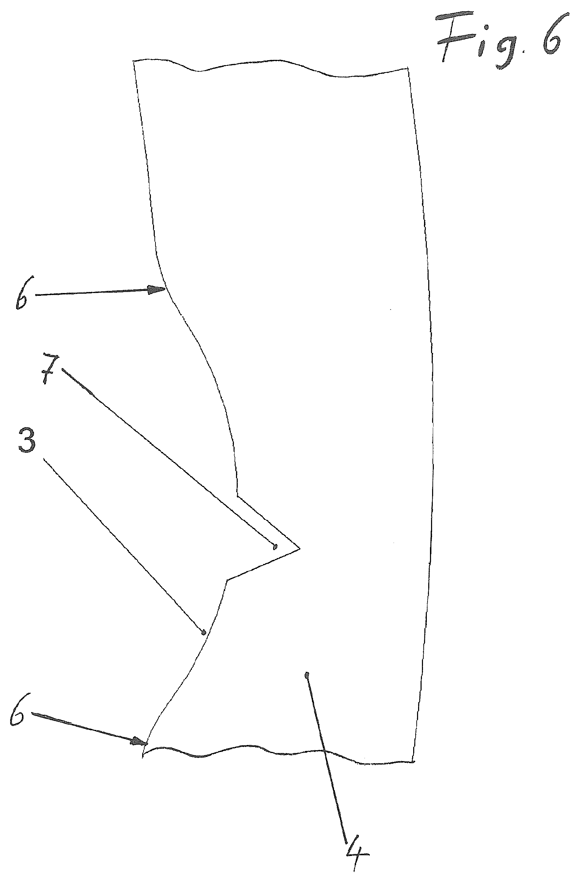

In Figur 6, die Figur 5 ähnelt, ist im Grund der Laufbahnrücknahme 3 eine Zusatzkerbe 7 eingearbeitet, wodurch der Verlauf der Bruchlinie eindeutig vorgegeben ist, Die Kerbe 2 an der Außenfläche wie in Figur 5 kann dabei entfallen.

### Bezugszahlenliste

- 1: Innenkerbe
- 2: modifizierte Außenkerbe
- 3: Laufbahnrücknahme
- 4: Hülse
- 5: Außenkerbe
- 6: Übergangsbereich

## Patentansprüche

1. Lagerring, bestehend aus einem Ringelement, das zumindest zwei Nuten aufweist, die sich von einer Axialseite bis zur anderen Axialseite des Ringelements erstrecken, wobei das Ringelement als durch Tiefziehen hergestellte Hülse (4) ausgebildet ist und die Nuten beim Tiefziehen der Hülse (4) mit eingearbeitet sind, **dadurch gekennzeichnet, dass** die Nuten Sollbruchlinien beim Aufbrechen (Cracken) des Ringelements bilden und als Laufbahnrücknahmen (3) auf der Innenfläche der Hülse (4) ausgebildet sind, wobei in den Laufbahnrücknahmen (3) Zusatzkerben (7) eingearbeitet sind.

2. Lagerring nach Anspruch 1, **dadurch gekennzeichnet, dass** die Übergangsbereiche (6) zwischen den Laufbahnrücknahmen (3) und der Lagerfläche durch einen logarithmischen Verlauf definiert sind.

3. Lagerring nach Anspruch 1, **dadurch gekennzeichnet, dass** auf der Außenfläche der Hülse (4) den Laufbahnrücknahmen (3) gegenüberliegende Kerben (2, 5) vorgesehen sind, die in Richtung zum Hülsenkern spitz ausgeführt sind.

## Claims

1. Bearing ring, comprising a ring element, which has at least two grooves which extend from one axial side to the other axial side of the ring element, wherein the ring element is designed as a sleeve (4) which is produced by deep drawing and the grooves are also incorporated during the deep drawing of the sleeve (4), **characterized in that** the grooves form predetermined break lines for breaking open (cracking open) the ring element and are formed as running track reliefs (3) on the inner surface of the sleeve (4), wherein additional notches (7) are incorporated in the running track reliefs (3).

2. Bearing ring according to Claim 1, **characterized in that** the transition regions (6) between the running track reliefs (3) and the bearing surface are defined by a logarithmic characteristic.

3. Bearing ring according to Claim 1, **characterized in that** provision is made on the outer surface of the sleeve (4) for notches (2, 5) which lie opposite the running track reliefs (3) and which are tapered to a point in the direction towards the sleeve core.

## Revendications

1. Bague de palier, constituée d'un élément annulaire qui présente au moins deux rainures qui s'étendent depuis un côté axial jusqu'à l'autre côté axial de l'élément annulaire, l'élément annulaire étant réalisé sous forme de douille (4) fabriquée par emboutissage et les rainures étant incorporées lors de l'emboutissage de la douille (4), **caractérisée en ce que** les rainures forment des lignes de rupture lors de l'ouverture par rupture (craquage) de l'élément annulaire et sont réalisées sous forme de retraits de chemin de roulement (3) sur la surface intérieure de la douille (4), des encoches supplémentaires (7) étant pratiquées dans les retraits de chemin de roulement (3).

2. Bague de palier selon la revendication 1, **caractérisée en ce que** les régions de transition (6) entre les retraits de chemin de roulement (3) et la surface de palier sont définies par une courbe logarithmique.

3. Bague de palier selon la revendication 1, **caractérisée en ce que** des encoches (2, 5) opposées aux retraits de chemin de roulement (3) sont prévues sur la surface extérieure de la douille (4), lesquelles sont réalisées en pointe dans la direction du centre de la douille.
